# EUROPEAN PATENT APPLICATION

(11) **EP 4 773 532 A1**
(43) Date of publication of application: **08.07.2026**
(21) Application number: 26150010.2
(22) Date of filing: 02.01.2026
(51) Int. Cl.: H04L 1/16, H04W 28/04, H04W 12/03

(54) **METHOD AND DEVICE FOR PROCESSING AMBIENT IOT DATA**

(30) Priority: 02.01.2025 KR 20250000558; 09.09.2025 KR 20250128646; 18.12.2025 KR 20250203371
(71) Applicant: KT Corporation, Seongnam-si, Gyeonggi-do 13606 (KR)
(72) Inventor: HONG, Sung-pyo, 13606 Seongnam-si, Gyeonggi-do (KR)
(74) Representative: BCKIP Part mbB

(57) **Abstract**

Provided are a method and device for processing ambient Internet of Things (IoT) data in a wireless communication system. The device receives a paging message including first device identification information, and checks whether the first device identification information matches second device identification information stored in the device. Further, based on a result of the checking, the device transmits a medium access control (MAC) message including upper layer data, wherein the paging message includes a first security parameter and information indicating presence of the first security parameter.

## Description

### CROSS-REFERENCE TO RELATED THE APPLICATION

This application is based on and claims priority on Patent Application No. 10-2025-0000558 filed on Jan. 2, 2025, No. 10-2025-0128646 filed on Sep. 9, 2025 and No. 10-2025-0203371 filed on Dec. 18, 2025 in the Korean Intellectual Property Office, the disclosures of which are incorporated by reference herein in their entirety.

### BACKGROUND

### Technical Field

The present disclosure relates to wireless communication applicable to 5G NR, 5G-Advanced and 6G.

### Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios classified as Enhanced Mobile BroadBand (eMBB), Ultra-reliable and low-latency communication (URLLC), Massive Machine-Type Communications (mMTC), and the like.

eMBB, URLLC, and mMTC represent next generation mobile communication scenarios. eMBB is characterized by high spectral efficiency, high user experienced data rate, high peak data. URLLC is characterized by ultra-reliability, ultra-low latency, ultra-high availability (e.g., vehicle-to-everything (V2X), Emergency Service, Remote Control). mMTC is characterized by low cost, low energy consumption, short packet transmission, and massive connectivity (e.g., Internet of Things (IoT)).

### SUMMARY

The disclosure provides a method and device for processing data of a device that offers ultra-low complexity and ultra-low power operation in a wireless communication system.

According to an embodiment, a method of a device may be provided for processing data in a wireless communication system. The method of the device may include receiving a paging message including first device identification information, checking whether the first device identification information matches second device identification information stored in the device, and based on a result of the checking, transmitting a medium access control (MAC) message including upper layer data, wherein the paging message includes a first security parameter and information indicating presence of the first security parameter.

According to another embodiment, a device may be provided for processing data in a wireless communication system. The terminal may include at least one processor; and at least one memory configured to store instructions and operably electrically connectable to the at least one processor, wherein operations performed based on the instructions executed by the at least one processor include: receiving a paging message including first device identification information, checking whether the first device identification information matches second device identification information stored in the device, and based on a result of the checking, transmitting a medium access control (MAC) message including upper layer data, wherein the paging message includes a first security parameter and information indicating presence of the first security parameter.

The first security parameter may be used to generate a security-protected identifier, and the security-protected identifier may be generated based on a device identifier.

Meanwhile, the upper layer data may include at least one of the device identifier and a second security parameter calculated by the device. Here, the device identifier and the second security parameter may be included in a non-access stratum (NAS) message as separate fields.

In addition, the paging message may include a predetermined field, and based on the predetermined field, at least one of the first device identification information and the first security parameter may be delivered to an upper layer.

Further, checking whether the first device identification information matches second device identification information stored in the device may include instructing, by an upper layer, the MAC layer whether the first device identification information matches the second device identification information.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIGS. 7A to 7B illustrate examples of connectivity topologies for an ambient IoT network and a device.
FIG. 8 illustrates an example of a procedure for an A-IoT inventory service.
FIG. 9 illustrates an example of an access stratum (AS) procedure between an A-IoT device and a reader.
FIGS. 10A to 10B illustrate A-IoT access procedures to which one embodiment of the present specification may be applied.
FIG. 11 is a block diagram showing apparatuses according to an embodiment of the disclosure.
FIG. 12 is a block diagram showing a terminal according to an embodiment of the disclosure.
FIG. 13 is a block diagram of a processor in accordance with an embodiment.
FIG. 14 is a detailed block diagram of a transceiver of a first apparatus shown in FIG. 11 or a transceiving unit of an apparatus shown in FIG. 12.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

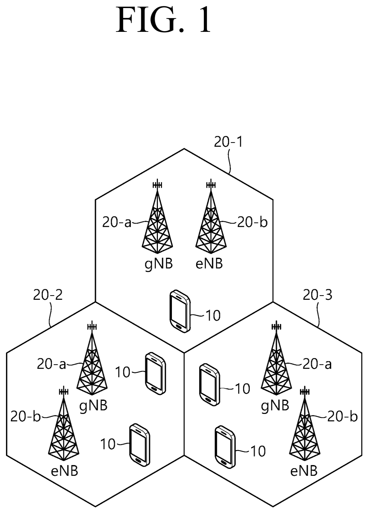

**FIG. 1** **is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

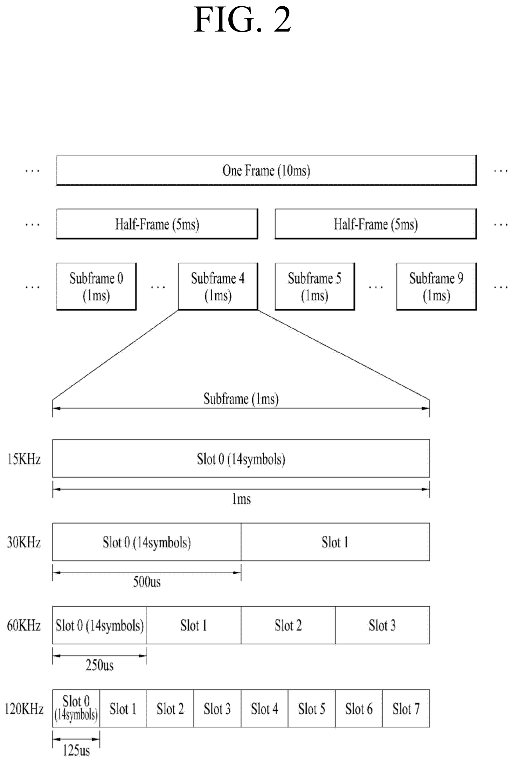

**FIG. 2** **is a diagram illustrating a structure of a radio frame used in new radio** (NR).

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{sllot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

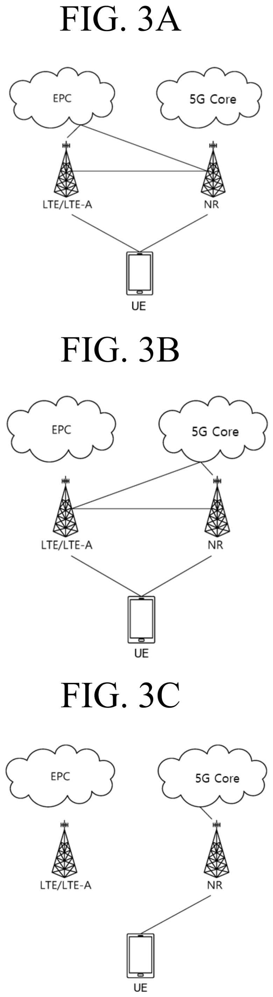

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

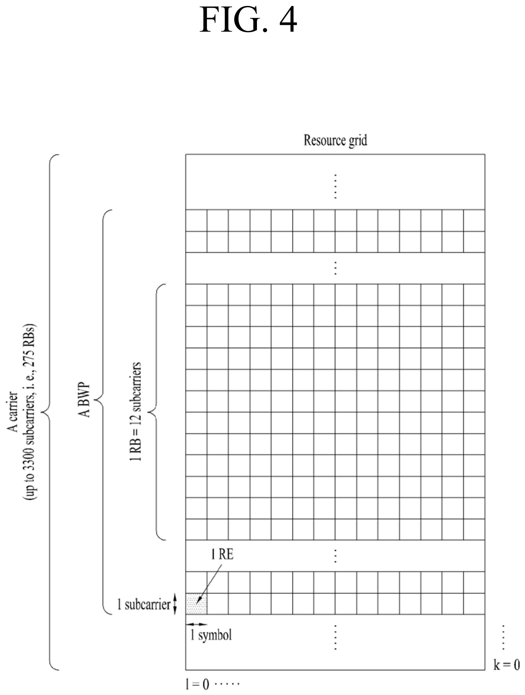

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

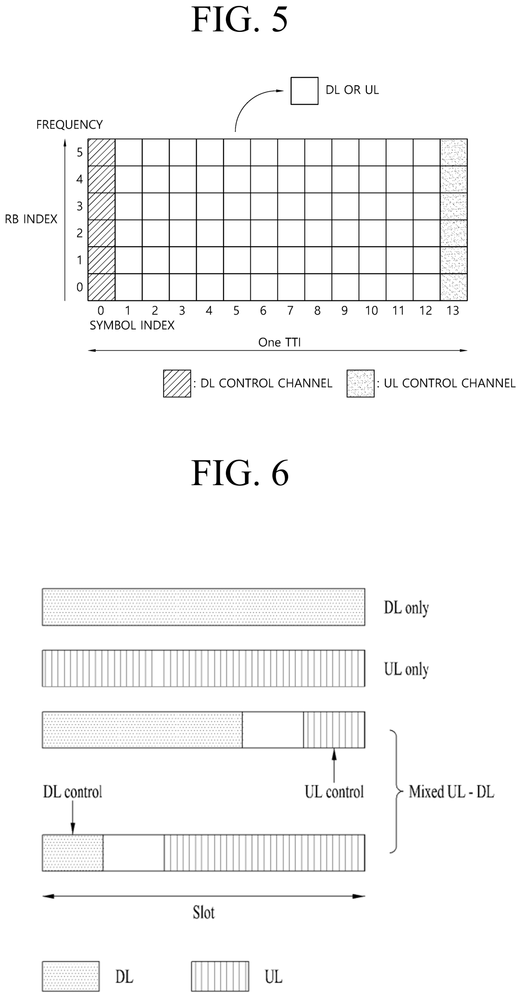

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration
   - DL region + Guard Period (GP) + UL control region
   - DL control region + GP + UL region

DL region: (i) DL data region, (ii) DL control region + DL data region
UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some symbols within a subframe that transition from DL to UL mode may be configured as the GP.

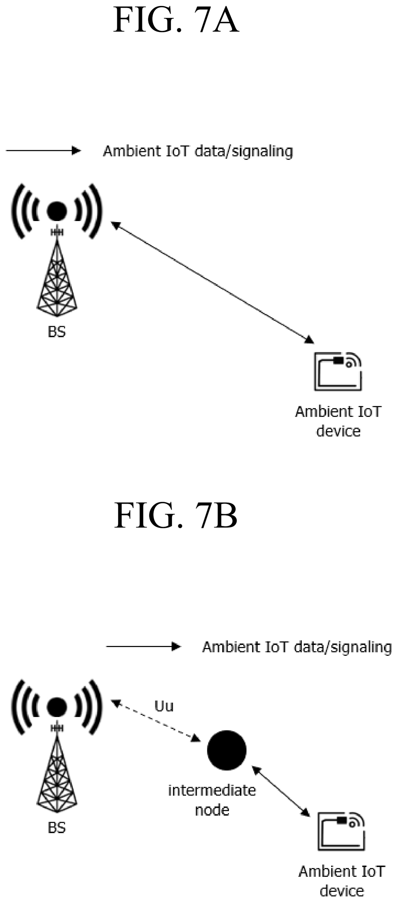

**FIGS. 7A to 7B** **illustrate examples of connectivity topologies for an ambient IoT network and a device.**

An ambient Internet of Things (ambient Internet of Things or ambient power-enabled Internet of Things: A-IoT/AloT) device is an IoT device powered by energy harvesting and having no battery or having limited energy storage capability (for example, using a capacitor). For convenience of description, an AIoT device may hereinafter be referred to as a device. This is merely for convenience of description, and the name may be changed to any other term.

Energy is provided through energy harvesting from radio waves, light, motion, heat, or other suitable power sources. Energy harvesting may be continuous (for example, by vibration) or may occur intermittently. Accordingly, it cannot be assumed that an AIoT device always has power available for data transmission and reception.

An AloT device needs to be designed to have lower complexity, smaller size, reduced capability, and lower power consumption than previously defined 3GPP IoT terminals/devices (for example, NB-IoT (Narrowband Internet of Things) or eMTC (enhanced Machine Type Communication) devices). An AIoT device may be designed to have a lifetime of more than 10 years without maintenance. Accordingly, AIoT devices may replace existing 3GPP IoT devices or support various use cases (for example, inventory, sensors, positioning, and commands) that cannot be supported by existing 3GPP IoT devices.

Functions and procedures for supporting ambient IoT use cases may be defined as AIoT services (for example, an inventory service and a command service). For example, a main purpose of the inventory service is to search for goods (for example, boxes, containers, packages, or tools) present in a specific area. When a request is transmitted within a network for a specific area, AIoT devices attached to such goods report identifiers associated with the goods, and additional information such as status, measurement results, and/or location may be added by the AIoT devices and/or an AIoT RAN (Radio Access Network)/reader. Through the inventory service, AIoT devices within a predetermined range of a specific reader may be discovered and/or tracked.

A command service represents a procedure for executing commands for AIoT devices located in a specific area. The commands may include, for example, read, write, disable, and/or enable services.
- Read: a request to read information from an AIoT device.
- Write: a request to write information to an AIoT device.
- Disable: a request to permanently or temporarily disable an RF transmission capability of an AIoT device.
- Enable: a request to enable an AIoT device that has been temporarily disabled.

Connectivity topologies such as those shown in FIGS. 7A to 7B may be defined for an ambient Internet of Things (AIoT) network and devices. In FIG. 7A, a BS represents an ambient IoT Radio Access Network (RAN). The AIoT RAN represents a node that performs specific functions for AIoT as part of a functional split between a Radio Access Network (RAN) and a Core Network (CN), for example, a RAN node function that includes control of A-IoT radio resources used by an A-IoT device. The AIoT RAN may serve one or more AIoT readers. An AIoT reader represents a reader that terminates an AIoT protocol with an AIoT device. For convenience of description, the node may hereinafter be referred to as an AIoT RAN (or an AIoT reader). This is merely for convenience of description, and the node may be denoted by any other term, such as an AIoT RAN reader, an AIoT base station, or an AIoT BS reader.

In all of these topologies, a carrier may be provided to an AIoT device from another node inside or outside the topology. Links in each topology may be bidirectional or unidirectional. In FIG. 7A, an AIoT device communicates directly and bidirectionally with a base station. Communication between the base station and the AIoT device may include AIoT data and/or signaling. A base station that transmits to the AIoT device and a base station that receives from the AIoT device may be the same base station or may be different base stations.

In FIG. 7B, an AloT device performs bidirectional communication with an AloT RAN via an intermediate node/assisting node/assisting UE. In this topology, the intermediate node/assisting node/assisting UE may be a relay, an integrated access and backhaul (IAB) node, a UE, a repeater, or the like, which is capable of ambient IoT functions and/or services. For convenience of description, the node may hereinafter be referred to as a UE reader. This is merely for convenience of description, and the node may be denoted by any other term, such as a UE connected to or associated with an AloT-enabled RAN, an AloT-enabled RAN/reader, an AIoT reader, or an AIoT UE reader.

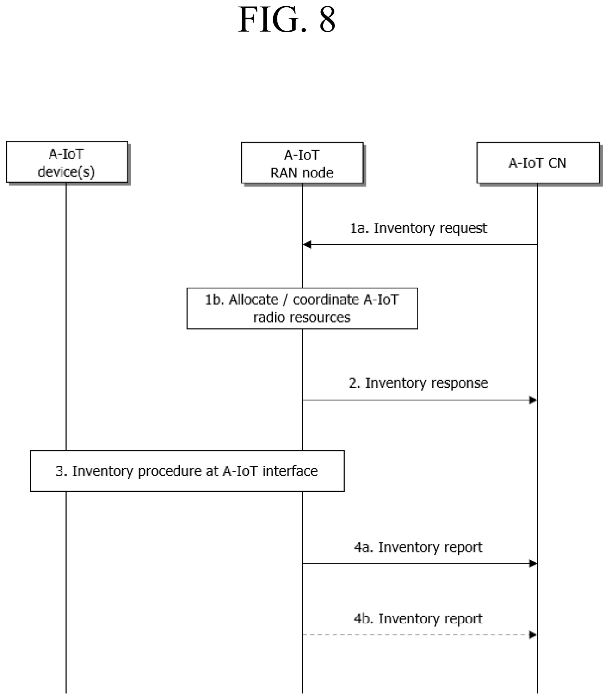

**FIG. 8** **illustrates an example of a procedure for an A-IoT inventory service.**

With reference to FIG. 8, a procedure for an AIoT inventory service is described below.
1a. The A-IoT CN sends an inventory request message to an A-IoT RAN node.
1b. The A-IoT RAN node allocates and coordinates usage of A-IoT radio resources.
2. The A-IoT RAN node sends an inventory response message to the A-IoT CN.
3. The A-IoT RAN node performs an inventory procedure toward one or more A-IoT devices over an A-IoT radio interface.
4a/4b. After receiving inventory results from the one or more A-IoT devices, the A-IoT RAN node may transmit one or more inventory reports to the A-IoT CN, the inventory reports including the received inventory results.

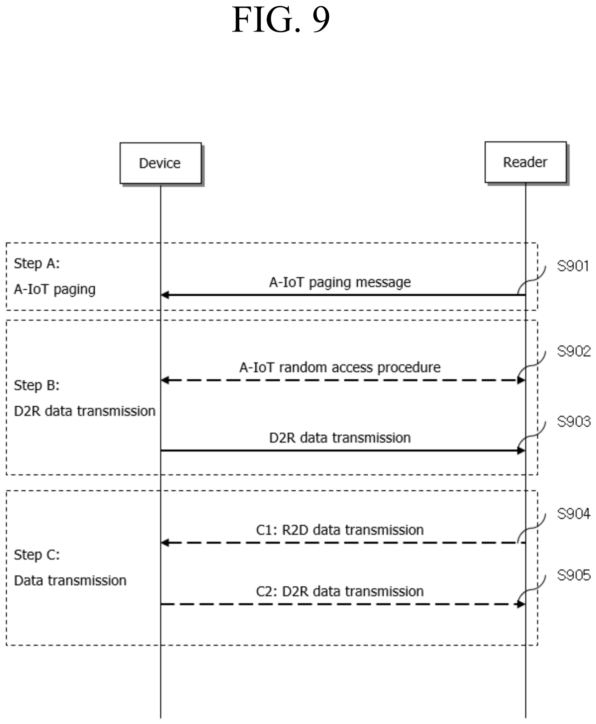

**FIG. 9** **illustrates an example of an access stratum (AS) procedure between an A-IoT device and a reader.**

With reference to FIG. 9, an overall Access Stratum (AS) procedure between an ambient Internet of Things (A-IoT) device and a reader is described below.

### Step A: A-IoT Paging (S901)

Based on a service request, the reader transmits an A-IoT paging message indicating one or more devices that are required to respond. In this case, the A-IoT paging message may be used interchangeably with an initial trigger message.

### Step B: D2R (Device-to-Reader) Data Transmission (S902-S903)

One or more A-IoT devices triggered by the paging perform transmission of a device identity (ID) to the reader by performing an A-IoT random access procedure or without performing the A-IoT random access procedure. Thereafter, D2R data is transmitted to the reader.

### Step C1: R2D (Reader-to-Device) Data Transmission (S904)

A possible R2D data transmission is performed, for example, for transmitting a command.

### Step C2: D2R Data Transmission (S905)

A possible D2R data transmission is performed, for example, for transmitting a corresponding response to the command.

As such, although a high-level procedure for providing an inventory service or a command service has been defined, because the lack of detailed operation between an A-IoT device and an A-IoT RAN/reader for A-IoT service support has prevented effective implementation of A-IoT services. In particular, methods for transmitting and receiving R2D/D2R between an A-IoT device and an A-IoT RAN/reader that considers A-IoT characteristics have not been provided.

In providing an A-IoT technology supporting lower complexity, a smaller size, reduced capability, and lower power consumption compared to existing 3GPP Low-Power Wide-Area (LPWA) IoT, a method for transmitting and receiving data by supporting a security function for an A-IoT device has not been provided.

To address these problems, the present disclosure proposes an AIoT data processing method supporting security functions and an apparatus therefor.

Hereinafter, data transmission and reception methods based on 5GS (Fifth Generation System) and NR technologies are described in detail. However, this is merely for convenience of description, and embodiments of the present disclosure may be applied based on any system or any radio access technology (for example, 6G). Embodiments described in the present disclosure may refer to information elements and operation details specified in NR/5GS standards (for example, TS 38.321 as an NR MAC specification, TS 38.331 as an NR RRC specification, and TS 23.501 as a system architecture specification). Even if definitions of such information elements and related terminal operations are not described in the present disclosure, corresponding contents specified in standard specifications as well-known technologies may be included in the present disclosure.

Any function described below may be defined as an individual terminal capability (for example, a UE radio capability or a UE core network capability) and may be transmitted by a terminal to a base station or a core network entity (for example, an AMF (Access and Mobility Management Function), an SMF (Session Management Function), or an AIoTNF (Ambient IoT Network Function)) through corresponding signaling. Alternatively, multiple functions may be combined or aggregated and defined as a terminal capability and may be transmitted by the terminal to the base station or the core network entity through corresponding signaling. Herein, an Ambient IoT Function or Ambient IoT Network Function (AIoTF) represents a network function for providing management and control of AIoT services and AIoT operations. This is merely for convenience of description, and the name may be changed to any other term. The AIoTF may select an AIoT RAN node (or a UE reader). The AIoTF may receive an AIoT service request from an application function or an application server and trigger an AloT RAN/reader (or an AIoT UE reader) to perform AIoT device operations and AIoT service operations. The AIoTF may collect AIoT service operation results from the AIoT RAN node (or the AIoT UE reader) and transmit the collected results to the application function or the application server.

An ambient IoT device may be classified and defined into at least one device type or category according to at least one supported capability or a combination of at least one capability. For example, according to an energy storage capacity, devices may be classified into a device having no energy storage, a device having an energy storage capacity up to a specific value (up to E1 Joules), and a device having an energy storage capacity up to another specific value (up to E2 Joules, where E2 > E1). As another example, devices may be classified into a device having no energy storage and no independent signal generation or amplification (for example, backscatter transmission) (hereinafter referred to as Device A for convenience of description), a device having an energy storage unit but no independent signal generation (for example, backscatter transmission) (hereinafter referred to as Device B for convenience of description), wherein use of stored energy in Device B may include amplification of a reflected signal, and a device having an energy storage unit and independent signal generation (for example, active RF components for transmission) (hereinafter referred to as Device C for convenience of description). As another example, devices may be classified into a device having approximately 1 µW peak power consumption, having energy storage, having no amplification in both downlink (DL) and uplink (UL) within the device, and performing uplink transmission by backscattering on an externally provided carrier wave (hereinafter referred to as Device 1 for convenience of description); a device having peak power consumption of less than or equal to a few hundred µW, having energy storage, having amplification in both DL and UL within the device, and performing uplink transmission by backscattering on an externally provided carrier wave (hereinafter referred to as Device 2a for convenience of description); and a device having peak power consumption of less than or equal to a few hundred µW, having energy storage, having amplification in both DL and UL within the device, and performing uplink transmission using a carrier wave internally generated by the device (hereinafter referred to as Device 2b for convenience of description).

An AIoT RAN/reader/base station/UE reader or an AIoTF may transmit, indicate, or configure information or messages to an AIoT device to instruct enabling, activation, allowance, support, and/or configuration of any function or any combination of functions described below. For example, such information or messages may be transmitted from the AIoTF to the AIoT device through an AIoT NAS message or container. Alternatively, such information or messages may be transmitted to the AIoT device through a dedicated MAC PDU by an AIoT RAN/reader/base station/UE reader.

An AIoT RAN/reader/base station/UE reader or an AIoTF may transmit, indicate, or configure information or messages to an AIoT device for disabling, deactivating, restricting, and/or controlling any function or any combination of functions described below. For example, a prohibit, suspend, or deactivate timer for operation of a corresponding function may be indicated. The timer may be started or restarted at initiation of the corresponding function or before or after initiation of the corresponding function. While the timer is running, the device may be disabled, deactivated, restricted, or controlled so as not to initiate or perform the corresponding function.

Embodiments and corresponding functions described below may be performed independently. Alternatively, the embodiments and functions described below may be arbitrarily combined or aggregated and implemented, and it is apparent that such implementations are also included within the scope of the present invention.

Any information described below may be traffic characteristic information obtained, calculated, or derived statistically or empirically by a terminal or a network (for example, arbitrary statistics or statistical values such as an expected value/average, variance, standard deviation, minimum, or maximum). Accordingly, any information included in the present specification may represent at least one of an average (expected value), a minimum, a maximum, or a standard deviation. This is merely for convenience of description, and all information in the present specification may be used as statistical information. Any information described below may be pre-configured in a device or a network, or may be provisioned through OAM (Operations, Administration, and Maintenance), an application server, an application function, AIoT, UDM (Unified Data Management), and/or ADM (AIoT Data Management).

Hereinafter, a physical channel for R2D (Reader to Device) data transmission is referred to as a PRDCH (Physical Reader to Device Channel), a physical channel for D2R (Device to Reader) data transmission is referred to as a PDRCH (Physical Device to Reader Channel), and an interface/link between a reader and a device is referred to as an RD interface/link (for example, an AIoT radio interface). This is merely for convenience of description, and may be replaced with any other term.

Hereinafter, RD/DR link resource and scheduling information may include at least one of:
a start time/subframe/slot/symbol/reference time/arbitrary AIoT device unit time (for RD/DR link communication);
a start time/subframe/slot/symbol/reference time/arbitrary AIoT device unit time offset (for RD/DR link communication);
a start time/subframe/slot/symbol based on a specific reference time/point (for example, R2D data reception, start of R2D data reception, end of R2D data reception, or a serving base station/cell-specific reference time serving the corresponding reader);
a start time/subframe/slot/symbol offset based on a specific reference time (for RD/DR link communication);
a duration (for RD/DR link communication);
a transmission occasion (for an RD/DR link);
a transmission period (for an RD/DR link);
available time slots;
an available time-slot range;
a maximum number of time slots;
an uplink/downlink start time/subframe/slot/symbol and/or a start time/subframe/slot/symbol offset of an associated base station or assisting terminal for indicating an RD link start time;
frequency-domain information of an RD link;
an RD link subchannel number/index;
a DR link frequency offset;
an RD/DR link MCS;
an RD/DR link transport block size;
a communication range;
location information;
a priority;
a number of retransmissions for an RD/DR link; and
a validity period/time and/or a validity criterion (for RD/DR link communication).

### Security Handling for an A-IoT Device

To reduce the complexity of A-IoT devices, it is desirable to minimize security functions for A-IoT devices. However, for mobile network-based A-IoT to support differentiated functions compared to Radio-Frequency Identification (RFID), it is desirable to provide some of the main functions of a mobile network, one of which is security. In one embodiment, Access Stratum (AS) security may not be supported between an A-IoT device and an A-IoT RAN, but security may be provided at the Non-Access Stratum (NAS) layer between the A-IoT device and the A-IoTF according to operator policy. Alternatively, during the provisioning or initial network access process for an A-IoT device, registration and authentication may be supported, and subsequently, according to an instruction from the A-IoTF during the registration/authentication process, ciphering/privacy protection and/or integrity protection functions may be supported using a selectively received security parameter, or data may be transmitted/received without security processing.

To support various use cases for security, it is desirable to allow an operator to selectively apply a security function. For example, by enabling selective configuration/application/enablement/disablement of a security function, the security function may be supported by the operator's selection/request/instruction/configuration considering the device type or deployment situation.

For example, configuration/application/enablement/disablement of NAS security (and/or AS security) may be supported in an A-IoT device. As an example, a core network may configure/set/change/apply parameters for NAS layer security processing for an A-IoT device through an A-IoT service request procedure (e.g., an inventory procedure or a command procedure). The core network may enable/disable/activate/deactivate a NAS layer security processing function for an A-IoT device through an A-IoT service request procedure (e.g., an inventory procedure or a command procedure).

When an identifier of an A-IoT device is authenticated in a core network (e.g., when authenticated within an A-IoTF or through authentication between an A-IoTF and an authentication server) or when subscription information for an A-IoT device exists in a core network (e.g., A-IoT Device Management, ADM), the A-IoTF may perform NAS security parameter configuration/change/application and/or NAS security function enable/disable/activation/deactivation for the A-IoT device. As an example, if subscription information for the A-IoT device exists in a core network node/NF (Network Function, e.g., ADM) providing a subscription information management function, the A-IoTNF may receive at least one of a security parameter for authentication/security processing for the A-IoT device and a security-processed/protected A-IoT device identifier from the core network node/NF, apply a security function at the NAS layer between the A-IoT device and the A-IoTNF, and perform an A-IoT service procedure.

Alternatively, (through pre-configuration or corresponding parameter configuration/setting/change/application) when an identifier of an A-IoT device is authenticated in a core network (e.g., when authenticated within an A-IoTF or through authentication between an A-IoTF and an authentication server) or when subscription information for an A-IoT device exists in a core network (e.g., A-IoT Device Management, ADM), an A-IoT service may be provided for the A-IoT device without NAS security (and/or AS security) processing. As an example, an operator may perform an A-IoT service procedure at the NAS layer between an A-IoT device and an A-IoTF using an A-IoT device identifier in plaintext (i.e., not security-processed), such as a permanent A-IoT device identifier.

As another example, when an application function/application server requests an A-IoT service (e.g., an inventory procedure or a command procedure) from an A-IoTF, it may include an instruction on whether to request/process security. Upon receiving the information, the A-IoTNF may apply a security protection/processing/release/verification function to an A-IoT device identification information and/or a NAS message at the NAS layer and initiate/perform an A-IoT service procedure. As an example, the A-IoTNF may transmit an A-IoT service request message (e.g., an inventory request message or a command request message) including a security-processed/protected A-IoT device identifier and/or a security-processed/protected NAS message to an A-IoT RAN/reader. The A-IoT service request message may be transmitted including at least one of information on the existence of a temporary identifier processing type/method protected by security/privacy (or whether to use a temporary identifier protected by security/privacy), a temporary identifier processing type/method protected by security/privacy, whether to activate security processing, a security-protected command request, A-IoT device authentication, and a random parameter for security processing/protection of A-IoT device identification information (e.g., a RAND generated by the network). The information may be included in an NGAP message or an A-IoT NAS message by the A-IoTNF and transmitted to an A-IoT RAN/reader or an A-IoT device.

As another example, an R2D MAC PDU between an A-IoT device and an A-IoT RAN/reader (or a MAC message/PDU including one (or more) higher-layer data (MAC SDU) or a header/subheader of the MAC message/PDU) may include information/a field for indicating whether to configure/apply/enable/disable higher-layer/NAS security (or a MAC header/subheader included in the MAC layer between an A-IoT device and an A-IoT RAN/reader may include information/a field for indicating whether to configure/apply/enable/disable/activate/deactivate higher-layer/NAS security). When the A-IoT device receives the information, it may deliver the corresponding higher-layer data to a higher layer (NAS) to have the security function processed at the higher layer.

For example, a MAC PDU for A-IoT paging (or a paging MAC PDU or its MAC header) or a MAC PDU including R2D data may include information/a field for indicating whether to configure/apply/enable/disable higher-layer/NAS security. The information may be transmitted including at least one of information for indicating whether to request/process security, a security parameter, a security-processed/protected A-IoT device identifier, information for indicating whether to process/request a security-processed/protected A-IoT device identifier, and a random parameter for A-IoT device authentication and security processing/protection of A-IoT device identification information (e.g., a RAND generated by the network). When an A-IoT device receives the information, the MAC layer may indicate the information to a higher layer (e.g., A-IoT NAS, A-IoT data/application).

As another example, an A-IoTF may instruct a configuration/configuration parameter for any security function to an A-IoT device via NAS signaling. In one embodiment, it may instruct security configuration information using a command (e.g., WRITE, Enable, or Disable) service. The configuration may include information for indicating whether to enable/disable/activate/deactivate any security function. As an example, an A-IoTF may generate an A-IoT NAS command request and perform security processing/protection for the command request message. An A-IoT service request message (e.g., an inventory request message or a command request message) transmitted from an A-IoTF to a RAN/reader may be transmitted including at least one of information on whether to activate security processing and a security-protected command request. The information may be included in the corresponding Next Generation Application Protocol (NGAP) message or A-IoT NAS message. Upon receiving the configuration, the A-IoT device may apply the configuration. The A-IoT device may perform an A-IoT service operation using the security function/parameter. For example, it may perform security verification (e.g., integrity verification) and deciphering on the security-processed/protected command request. The A-IoT device may generate a NAS command response and perform security processing/protection for the command response message. As another example, when an A-IoT device is instructed that the A-IoT device and/or a security function of the A-IoT device be disabled/deactivated, if it has received a parameter (e.g., on-duration/off-duration, period, and/or offset) for monitoring/receiving an enable/activation instruction for the A-IoT device and/or the security function of the A-IoT device, the A-IoT device may store the parameter in a non-volatile memory as a device parameter. The A-IoT device may monitor the enable/activation instruction using the parameter.

As another example, a security processing/verification function/parameter may be preconfigured in an A-IoT device and/or an A-IoTF. An A-IoT service procedure may be provided according to the preconfigured security processing/verification function/parameter. In one embodiment, a specific/any (e.g., predetermined) security parameter (e.g., a security key, a security algorithm) used for security processing/verification of A-IoT identification information and/or a NAS message may be preconfigured in an A-IoT device and/or an A-IoTF/core network node. The A-IoT device may perform security processing/verification using a predetermined security parameter received from an A-IoT/RAN/reader and another security parameter (a security key) preconfigured in the A-IoT device. It may perform security verification (e.g., integrity verification) and deciphering on a received security-processed/protected command request. It may perform security processing/protection (integrity protection, ciphering) on a generated NAS command response. A D2R MAC message transmitted from an A-IoT device to an A-IoT RAN/reader may include a security-processed/protected NAS message.

As another example, when any/a specific security function is not supported between an A-IoTF and an A-IoT device (or between an A-IoT RAN/Reader and an A-IoT device) or when any/a specific security function is set/configured/instructed as disabled/deactivated between an A-IoTF and an A-IoT device (or between an A-IoT RAN/Reader and an A-IoT device), data may be transmitted and received without processing for the security function. As an example, if ciphering/encryption/decryption is disabled/deactivated, it may operate as follows. Hereinafter, for convenience of description, security protection/privacy-protection/cyphering for A-IoT device identification information among security functions is described. However, it is self-evident that a processing method for any other security function (e.g., authentication, authorization, cyphering/integrity-protection for a command message between an A-IoTF and an A-IoT device) is also included in the scope of the present disclosure.

An A-IoTF may determine A-IoT device identification information to be included in a paging message on an A-IoT radio interface based on information received from an application function. If security/privacy protection is not performed for A-IoT device identification information, A-IoT device identification information included in an A-IoT service request message (e.g., an inventory request message or a command request message) transmitted from an A-IoTF to an A-IoT RAN/Reader may be transmitted without security/encryption protection/processing for the information. A permanent A-IoT device identification information using plaintext may be transmitted. A-IoT device identification information included in an A-IoT paging message transmitted from an A-IoT RAN/reader to an A-IoT device may be transmitted without security/encryption protection/processing for the information. A permanent A-IoT device identification information using plaintext may be transmitted. A-IoT device identification information included in a D2R message (e.g., message 1, MSG1, message3, MSG3, D2R data transmission, or D2R data transmission including a NAS message/container) transmitted from an A-IoT device to an A-IoT RAN/reader in response to the paging may be transmitted without security/encryption protection/processing for the information. A permanent A-IoT device identification information using plaintext may be transmitted. A-IoT device identification information included in an A-IoT service response/report message (e.g., an inventory report message or a command response message) transmitted from an A-IoT RAN/reader to an A-IoTF may be transmitted without security/encryption protection/processing for the information. A permanent A-IoT device identification information using plaintext may be transmitted.

As another example, when any/a specific security function is supported between an A-IoTF and an A-IoT device (or between an A-IoT RAN/reader and an A-IoT device) or when any/a specific security function is set/configured/instructed as enabled/activated between an A-IoTF and an A-IoT device (or between an A-IoT RAN/Reader and an A-IoT device) (or when activation of a specific security function is instructed by an inventory request message or a command request message), data may be transmitted and received through protection/processing/release/verification for the security function. As an example, if security/encryption protection/processing/release/verification (privacy-protection/cyphering/encryption/decryption/verification) for an A-IoT device identifier is enabled/activated, it may operate as follows.

An A-IoTF may determine A-IoT device identification information to be included in a paging message on an A-IoT radio interface based on information received from an application function. A-IoT device identification information included in an A-IoT service request message (e.g., an inventory request message or a command request message) transmitted from an A-IoTF to an A-IoT RAN/reader may be transmitted as privacy-protected/ciphered/encrypted A-IoT device identification information. As an example, it may include a temporary A-IoT device identifier generated/derived through security protection/processing. Furthermore, A-IoT device identification information included in an A-IoT service request message (e.g., an inventory request message or a command request message) transmitted from an A-IoTF to an A-IoT RAN/reader may be transmitted as plaintext A-IoT device identification information. Furthermore, an A-IoT service request message (e.g., an inventory request message or a command request message) transmitted from an A-IoTF to an A-IoT RAN/reader may transmit any security parameter necessary for security/encryption protection/processing and/or security/encryption release/verification at an A-IoT device, an A-IoT RAN/reader. As an example, it may be transmitted including a security parameter for generating a security-protected/processed temporary A-IoT device identifier (e.g., a random parameter/number (RAND_Network) generated at a core network node (A-IoT Data Management, ADM)). And/or, it may include at least one of a security key used for decrypt/verification of encrypted A-IoT device identification information at an A-IoT device, a fresh value (changed to prevent tracing), and a counter. And/or, it may include at least one of a security key used for privacy-protection/encryption/cyphering of A-IoT device identification information by an A-IoT device, a fresh value (changed to prevent tracing), a counter, and a random parameter/number. And/or, it may include at least one of a security key used for privacy-protection/decryption/verification of encrypted A-IoT device identification information transmitted by an A-IoT device at an A-IoT RAN/reader, a fresh value (changed to prevent tracing), a counter, and a random parameter/number.

A-IoT device identification information included in an A-IoT paging message transmitted from an A-IoT RAN/reader to an A-IoT device may be transmitted as privacy-protected/ciphered/encrypted A-IoT device identification information. Furthermore, A-IoT device identification information included in an A-IoT paging message transmitted from an A-IoT RAN/Reader to an A-IoT device may be transmitted as plaintext A-IoT device identification information. Furthermore, an A-IoT paging message (or any subsequent R2D message, e.g., A-IoT message2, MSG2, R2D data transmission, or R2D data transmission including a NAS message/container) transmitted from an A-IoT RAN/reader to an A-IoT device may transmit any security parameter necessary for security/encryption protection/processing and/or security/encryption release/verification at the A-IoT device. As an example, it may be transmitted including a security parameter used to generate a security-protected/encrypted A-IoT device identification information for security/encryption protection/release/verification at an A-IoT device (e.g., a security key, a fresh value, a counter, a random parameter/number, and/or whether a security-protected temporary A-IoT device identifier is generated based on a permanent A-IoT device identifier or a stored temporary identifier). The A-IoT device identification information and the security parameter may be included in a NAS message/container included in the A-IoT paging message or in a MAC header within the A-IoT paging MAC PDU. As an example, a security-protected/encrypted A-IoT device identification information and the security parameter may be provided through one NAS field within a NAS message/container included in an A-IoT paging message. The information may be processed at the A-IoT NAS layer (through a corresponding header or field distinction). Or, a security-protected/encrypted A-IoT device identification information and the security parameter may be provided through different fields within a NAS message/container included in an A-IoT paging message. Or, a security-protected/encrypted A-IoT device identification information and the security parameter may be provided through different fields within a MAC header in the A-IoT paging MAC PDU. Or, a security-protected/encrypted A-IoT device identification information is included in a NAS message/container, and the security parameter is included in a MAC header within the A-IoT paging MAC PDU, and upon receiving the A-IoT paging MAC PDU, the A-IoT device may deliver the security-protected/encrypted A-IoT device identification information and the security parameter to a higher layer.

An A-IoT device may perform security/encryption protection/release/verification for receivedprotected/ciphered/encryptedA-IoT device identification information. Through this, the A-IoT device may determine whether a security/encryption protected/released/verified A-IoT device identification information matches the A-IoT device identification information received through an A-IoT paging message. As an example, an A-IoT device may generate a privacy protected/ciphered/encrypted A-IoT device identification information using a security parameter received through a paging message. If the generated privacy protected/ciphered/encrypted A-IoT device identification information matches a privacy protected/ciphered/encrypted A-IoT device identification information received through a paging message, the A-IoT device may determine that the A-IoT device has been selected. Furthermore, an A-IoT device may check whether received plaintext A-IoT device identification information matches the A-IoT device identification information. As an example, if a non-security-processed A-IoT device identifier is included for a single device or for a group identifier, it may check whether the A-IoT device identification information matches through the non-security-processed A-IoT device identifier. Furthermore, an A-IoT device may perform privacy-protection/encryption/ciphering for A-IoT device identification information. As an example, an A-IoT device may generate a privacy protected/ciphered/encrypted A-IoT device identification information using a security parameter received through a paging message. A-IoT device identification information included in a D2R message (e.g., MSG1, MSG3, or D2R data transmission) transmitted from an A-IoT device to an A-IoT RAN/reader in response to the paging may be transmitted as a security-protected/encrypted A-IoT device identification information. A corresponding/subsequent/any D2R message (e.g., MSG1, MSG3, or D2R data transmission) transmitted from an A-IoT device to an A-IoT RAN/reader may transmit any security parameter necessary for security/encryption protection/release/verification. As an example, it may include at least one of a security key used for decryption/verification of encrypted A-IoT device identification information at an A-IoT RAN/reader/A-IoTF, a fresh value (changed to prevent tracing), a counter, a verification value/result value/response value (RES: Result /XRES: Expected Result) generated/derived at an A-IoT device, and a random parameter/number (RAND_Device) generated/derived at an A-IoT device.

The A-IoT device identification information and the security parameter may be included in a NAS message/container included in a D2R message (e.g., MSG1, MSG3, or D2R data transmission) transmitted from an A-IoT device to an A-IoT RAN/reader in response to A-IoT paging, or in a MAC header within a D2R message (e.g., MSG1, MSG3, or D2R data transmission) MAC PDU transmitted from an A-IoT device to an A-IoT RAN/reader in response to the A-IoT paging. As an example, a security-protected/encrypted A-IoT device identification information and the security parameter may be provided through a single field or one field within one NAS message/container included in a D2R message (e.g., MSG1, MSG3, or D2R data transmission) transmitted from an A-IoT device to an A-IoT RAN/reader in response to the A-IoT paging. The information may be processed at the A-IoT NAS layer (through a corresponding header or field distinction). Or, a security-protected/encrypted A-IoT device identification information and the security parameter may be provided through different fields within a NAS message/container included in a D2R message (e.g., MSG1, MSG3, or D2R data transmission) transmitted from an A-IoT device to an A-IoT RAN/reader in response to the A-IoT paging. Or, a security-protected/encrypted A-IoT device identification information and the security parameter may be provided through different fields within a MAC header in a D2R message (e.g., MSG1, MSG3, or D2R data transmission) MAC PDU transmitted from an A-IoT device to an A-IoT RAN/reader in response to the A-IoT paging. When an A-IoT RAN/reader receives the D2R message, the A-IoT RAN/reader may perform security protection/release/verification through the security-protected/encrypted A-IoT device identification information and the security parameter. An A-IoT RAN/Reader may deliver at least one of plaintext A-IoT device identification information, security-protected/encrypted A-IoT device identification information, and the security parameter to an A-IoTF. Or, only the security-protected/encrypted A-IoT device identification information or only the security parameter may be included in a NAS message/container. Or, a security-protected/encrypted A-IoT device identification information may be included in a NAS message/container, and the security parameter may be included in a MAC header within a D2R message (e.g., MSG1, MSG3, or D2R data transmission) MAC PDU transmitted from an A-IoT device to an A-IoT RAN/reader in response to the A-IoT paging, and when an A-IoT RAN/reader receives the A-IoT paging MAC PDU, the A-IoT RAN/reader may deliver at least one of an encrypted A-IoT device identification information and the security parameter to an A-IoTF (via an NGAP message).

A-IoT device identification information included in an A-IoT service response/report message (e.g., an inventory report message or a command response message) transmitted from an A-IoT RAN/reader to an A-IoTF may be transmitted as plaintext A-IoT device identification information. Furthermore, A-IoT device identification information included in an A-IoT service response/report message (e.g., an inventory report message or a command response message) transmitted from an A-IoT RAN/reader to an A-IoTF may be transmitted as security-protected/encrypted A-IoT device identification information. An A-IoT service response/report message (e.g., an inventory report message or a command response message) transmitted from an A-IoT RAN/reader to an A-IoTF may include at least one of a security key used for privacy-protect/decryption/verification of security-protected/encrypted A-IoT device identification information at the A-IoTF, a fresh value (changed to prevent tracing), a counter, a verification value/result value/response value (RES: Result / XRES: Expected Result) generated/derived at an A-IoT device, and a random parameter/number (RAND_Device) generated/derived at an A-IoT device.

As another example, a paging message may include a security processing parameter for an A-IoT device. The location of the information is determined. As an example, authentication for an A-IoT device may be performed when triggered by a network for an inventory procedure and a command procedure. As an example, an A-IoTF may receive a random number (e.g., 128-bit RAND) for the A-IoT device generated at a core network node (e.g., A-IoT Data Management, ADM) and transmit it to a RAN/reader through an inventory request. The RAN/reader may include the random number in a paging message. As another example, a security/privacy-protected temporary identifier may be used during an inventory procedure for A-IoT device identification information protection. The security/privacy-protected temporary identifier may be generated based on a key shared between an A-IoT device and a core network node (e.g., ADM) (e.g., K_A-IoT). When using a security/privacy-protected temporary identifier, an A-IoTF may transmit information for indicating a (security/privacy-protected) temporary identifier processing type/method to a RAN/reader through an inventory request message. Information for indicating a temporary identifier processing type/method (e.g., information for indicating a security processing type for A-IoT device identification information) may indicate whether a security/privacy-protected temporary identifier is a concealed type or a stored type. Information for indicating a temporary identifier processing type/method may indicate whether a temporary identifier is a concealed type protected/hidden by a stored temporary identifier, a concealed type protected/hidden by a permanent identifier, or a stored type. Information for indicating a temporary identifier processing type/method may include information for indicating whether the stored T-ID type shall be updated with or without a command. A paging message may include a security/privacy-protected temporary identifier and information for indicating a security/privacy-protected temporary identifier processing type.

For an ultra-low complexity A-IoT device, it is desirable to minimize the number of bits included in a paging message. Accordingly, it is necessary to effectively define the number of bits required for a security parameter.

For example, by making authentication mandatory for all inventory procedures, a field for indicating the existence of a security parameter for authentication (e.g., existence of a 128-bit RAND) (or whether authentication is performed) need not be included in an R2D paging message. A paging message includes a security parameter for authentication (e.g., a 128-bit RAND).

As another example, authentication for an A-IoT device may be performed when selectively triggered by a network. A paging message may include a field (e.g., 1 bit) for indicating the existence of a security parameter for authentication (e.g., existence of a 128-bit RAND) (or whether authentication is performed). If a security parameter for authentication exists, the field may be set to a predetermined value (e.g., presence 1, absence 0 or presence 0, absence 1) and the security parameter information for authentication may be included in a subsequent field based on the value of the field.

As another example, A-IoT device identification information protection/security processing may be performed selectively based on network configuration. A paging message may include a field (e.g., 1 bit) for indicating the existence of a security/privacy-protected temporary identifier processing type/method (or whether a security/privacy-protected temporary identifier is used). If protection/security processing for an A-IoT device identifier is applied/performed (or if security/privacy-protected temporary identifier processing type/method information exists), the field may be set to a predetermined value (e.g., presence 1, absence 0 or presence 0, absence 1) and a security/privacy-protected temporary identifier processing type/method may be included in a subsequent field. The security/privacy-protected temporary identifier processing type/method may be indicated using 2 bits to specify whether a temporary identifier is a concealed type protected/hidden by a stored temporary identifier (e.g., whether a temporary identifier is generated using a stored temporary identifier as a P0 input), a concealed type protected/hidden by a permanent identifier (e.g., whether a temporary identifier is generated using a permanent A-IoT identifier as a P0 input), or a stored type. The security/privacy-protected temporary identifier processing type/method may include information using an additional 1 bit for indicating whether the stored T-ID type shall be updated with or without a command.

As another example, a security parameter for authentication (or A-IoT identifier security/privacy protection) in a paging message (e.g., a field for indicating the existence of a random number (or whether authentication is performed), a security parameter for authentication (or A-IoT identifier security/privacy protection), a field for indicating the existence of a security/privacy-protected temporary identifier processing type/method (or whether a security/privacy-protected temporary identifier is used), and/or a security/privacy-protected temporary identifier processing type/method field) may be used to derive another security parameter (e.g., a result value/response value/verification value (RES) or an expected result value/expected response value/expected verification value (XRES: Expected Result)) after the A-IoT device determines whether to respond, or upon deciding to respond, based on whether the A-IoT device identification information matches at the NAS layer. Accordingly, since the matching of A-IoT device identification information needs to be processed first, the paging message may include a field for indicating the existence of an A-IoT device identification information (paging ID) and/or paging ID length, a paging ID length (8 bits), and subsequent to the A-IoT device identification information (paging ID), a field for indicating the existence of a security/privacy-protected temporary identifier processing type/method (or whether a security/privacy-protected temporary identifier is used) and a security/privacy-protected temporary identifier processing type/method field. Or, the paging message may include the fields in an alternative order, including A-IoT device identification information (paging ID) and/or information for indicating the existence of a paging ID length, paging ID length (8 bits), a field for indicating the existence of a security/privacy-protected temporary identifier processing type/method (or whether a security/privacy-protected temporary identifier is used), a security/privacy-protected temporary identifier processing type/method field, and A-IoT device identification information (paging ID).

As another example, since authentication-related security processing is performed after determining whether A-IoT device identification information matches, the identification information matching needs to be processed first; accordingly, the paging message may include the fields in the order of A-IoT device identification information (paging ID) and/or information for indicating the existence of a paging ID length, paging ID length (8 bits), A-IoT device identification information (paging ID), a field for indicating the existence of a security/privacy-protected temporary identifier processing type/method (or whether a security/privacy-protected temporary identifier is used), a security/privacy-protected temporary identifier processing type/method field, and a security parameter for authentication (e.g., a field for indicating the existence of a random number (or whether authentication is performed) and a security parameter for authentication). Or, the paging message may include the fields in an alternative order, including A-IoT device identification information (paging ID) and/or information for indicating the existence of a paging ID length, paging ID length (8 bits), a field for indicating the existence of a security/privacy-protected temporary identifier processing type/method (or whether a security/privacy-protected temporary identifier is used), a security/privacy-protected temporary identifier processing type/method field, A-IoT device identification information (paging ID), and a security parameter for authentication (e.g., a field for indicating the existence of a random number (or whether authentication is performed) and a security parameter for authentication).

As another example, a paging message used to instruct Contention Free Access (CFA) to an A-IoT device may include the fields in the order of paging ID length, A-IoT device identification information (paging ID), a field for indicating the existence of a security/privacy-protected temporary identifier processing type/method (or whether a security/privacy-protected temporary identifier is used), a security/privacy-protected temporary identifier processing type/method, and a security parameter for authentication (e.g., a field for indicating the existence of a random number (or whether authentication is performed) and a security parameter for authentication). Or, the paging message may include the fields in an alternative order including paging ID length, a field for indicating the existence of a security/privacy-protected temporary identifier processing type/method (or whether a security/privacy-protected temporary identifier is used), a security/privacy-protected temporary identifier processing type/method field, A-IoT device identification information (paging ID), and a security parameter for authentication (e.g., a field for indicating the existence of a random number (or whether authentication is performed) and a security parameter for authentication).

Hereinafter, another embodiment of the present disclosure will be described.

For example, a MAC header included in a MAC PDU for an AS (Access Stratum) A-IoT service procedure between an A-IoT device and an A-IoT RAN/reader (a MAC subheader if MAC supports multiplexing) may not include an explicit A-IoT device identification information field carrying A-IoT device identification information.

If A-IoT device identification information is not included in a MAC header/subheader, a MAC layer/entity of an A-IoT device may be unable to determine (through the MAC PDU header) whether the A-IoT device should respond to the A-IoT MAC PDU. As an example, it may check (through the MAC PDU header) whether the A-IoT device identification information matches. If A-IoT device identification information is not included in a MAC header/subheader, a MAC layer/entity of an A-IoT device may be unable to determine, based on the MAC PDU header, whether the MAC SDU should be delivered to a higher layer.

An A-IoT device (or MAC layer/entity) may determine whether a MAC PDU should be delivered to a higher layer based on specific/any/predetermined MAC header/subheader information/field other than A-IoT device identification information and deliver/transmit the MAC SDU (or a NAS message for an A-IoT service request or A-IoT service request data) to a higher layer (A-IoT NAS layer or A-IoT data/application layer). Or, an A-IoT device (or MAC layer/entity) may deliver/transmit a MAC SDU (or the information carried therein) including information in a paging message/MAC-PDU/MAC-SDU (or a paging message including a NAS message/container or a NAS message/container) to a higher layer. As an example, it may deliver/transmit at least one of A-IoT device identification information, a security parameter, and other information/field/parameter included in a MAC header to a higher layer.

A NAS message/container may include A-IoT device identification information and/or a security parameter. A MAC PDU may include at least one of a field for indicating whether a NAS message/container is included, a NAS message/container field, a field for indicating whether a paging message is included, a paging message/container field, a field for indicating whether security processing is performed, and a security parameter. If at least one of the information/fields is included/set in a MAC header/subheader (or according to a preconfigured criterion/rule/configuration), the MAC SDU (and/or any/specific information included in the MAC PDU/header/subheader (e.g., A-IoT service type)) may be delivered/transmitted to a higher layer.

If A-IoT device identification information in a received MAC SDU (or NAS message/container) (or security-processed A-IoT device identification information therefor) matches the A-IoT device identification information of the A-IoT device, an A-IoT device (or NAS layer/entity) may perform at least one of the following operations. (Alternatively, upon receiving a NAS message/container (or A-IoT device identification information, a security parameter),the A-IoT device (or NAS layer/entity) may perform at least one of the following operations). The order of the following operations represents an example, and they may be performed in any order other than the order described below.

It may perform security release/verification/processing for the A-IoT device identification information using the A-IoT device identification information and/or a security parameter and/or payload information in a NAS message/container and/or any field information included in a NAS message.

If security-released A-IoT device identification information matches the A-IoT device identification information of the A-IoT device, it may indicate the matching result to a lower layer (MAC)/higher layer (A-IoT data/application layer).

It may indicate payload information in the NAS message/container (and/or any field information included in a NAS message and/or any field information included in a NAS message/container, and information obtained by security-releasing it) to a higher layer (A-IoT data/application layer).

It may store at least one of information received from a MAC layer and/or payload information in the NAS message/container (and/or any field information included in a NAS message and/or any field information included in a NAS message/container (or information obtained by security-releasing it)) as a device variable.

It may generate/construct a NAS response message for the NAS request message.

It may generate/construct a NAS response message corresponding to the A-IoT service request.

An A-IoT device (or NAS layer/entity) may indicate information indicating a processing result to a lower layer (MAC layer). As an example, it may indicate this to request initiation of an A-IoT random access procedure. Alternatively, the A-IoT device may directly initiate an A-IoT random access procedure.

It may indicate payload information in the NAS message/container (and/or any field information included in a NAS message/container) to a lower layer (MAC layer or data/application layer).

It may receive a response message for the service request from a (A-IoT data/application layer).

It may indicate a response message for the request to a lower layer in response to an instruction/request from the lower layer.

If information for identifying an A-IoT device in a received MAC SDU (or NAS message/container) does not match the A-IoT device identification information, an A-IoT device (or NAS layer/entity) may discard/delete/remove the MAC-SDU/NAS message/container. An A-IoT device (or NAS layer/entity) may indicate to a lower layer whether the A-IoT device identification information matches and whether the MAC-SDU/NAS message/container has been discarded/deleted/removed.

To check whether information for identifying an A-IoT device in a received MAC SDU (or NAS message/container) matches the A-IoT device identification information of the A-IoT device, an A-IoT device (or NAS layer/entity) may perform security release (e.g., deciphering/decryption, integrity verification, Message Authentication Code verification, hash function) processing on a NAS message/container (or a specific field included in a NAS message/container, or A-IoT device identification information included in a NAS message/container). For such processing, the A-IoT device may use a security parameter included in the NAS message/container.

For A-IoT device identification information matching, if an A-IoT paging message includes an identifier of a single A-IoT device, the A-IoT device may consider it a match if the A-IoT device identifier included in the A-IoT paging message matches a single A-IoT device identifier configured/ stored/ calculated/ generated/ derived/ determined for the A-IoT device. The A-IoT device may consider it a match if the A-IoT device identifier included in the A-IoT paging message is the same as a group A-IoT identifier mapped to the A-IoT device. The paging MAC PDU or a downlink MAC PDU or its MAC header includes information/a field for instructing paging/reception for all devices within the A-IoT RAN/reader coverage, and the field is set, or if an A-IoT device identification information field is not included in the A-IoT paging message, or if an A-IoT device identification information field is set to a specific value (e.g., all 1s or all 0s), all A-IoT devices receiving the A-IoT paging message may be considered to require a response and thus be treated as a match.

An A-IoT device may be implemented with minimal specifications to support ultra-low complexity. The memory included in an A-IoT device may be classified into two types. First, a non-volatile memory for storing permanently stored information may be supported. Next, a register for temporarily maintaining information necessary for any service/operation of an A-IoT device while energy is available from an energy storage (e.g., a capacitor) may be supported. The non-volatile memory may store/be configured with one or more of a device ID of the A-IoT device, preconfigured radio resource configuration parameters, and preconfigured default parameters. A register (or volatile memory or temporary storage memory when the A-IoT device has available energy) may store/be configured with at least one of temporary radio resource configuration parameters, device variables, state variables, counters, and timers necessary for performing a specific A-IoT service operation in an A-IoT device.

As an example, while an A-IoT device is in an available state (e.g., a state where data transmission/reception is available/possible, a state where an operation for one or more specific A-IoT services/operations is available/possible, a state where stored/harvested/charged energy in the A-IoT device exceeds a certain level), at least one of preconfigured radio resource configuration parameters, temporary radio resource configuration parameters, device variables, state variables, counters, and timers may be instructed/set/applied/changed/configured/stored/started/executed/stopped/expired/incremente d/initialized/maintained. In one embodiment, an A-IoT device may receive radio resource configuration/setting information/a configuration profile from an A-IoTF via a NAS message/container and set/apply/change/configure/store the radio resource configuration parameters. Or, an A-IoT device may store/update/initialize/increment/start/stop related device variables/state variables/counters/timers in response to receiving a specific MAC PDU from an A-IoT RAN/reader.

As another example, when an A-IoT device transitions to an unavailable state/is deactivated/disabled (e.g., a state where data transmission/reception is unavailable/impossible/deactivated, a state where an operation for one or more A-IoT service/operation is unavailable/impossible/deactivated, or a state where stored/harvested/charged energy in the A-IoT device is below a certain level), at least one of the aforementioned temporary radio resource configuration parameters, device variables, state variables, counters, and timers may be initialized/released/deleted/removed/lost/discarded/reverted to a default value.

As another example, when an A-IoT device receives an R2D message/data, based on at least one of any/a specific field/information included in a header of the R2D message/data MAC PDU (or a MAC PDU/CE including the R2D message/data) and a header of a NAS message/container included in the R2D message MAC PDU (or any/a specific field/information included in the NAS message/container), at least one of preconfigured radio resource configuration parameters, temporary radio resource configuration parameters, device variables, state variables, counters, and timers at a MAC layer/entity and/or a NAS layer/entity may be instructed/set/applied/changed/configured/stored/started/executed/stopped/expired/incremente d/initialized.

An inventory procedure, which is a representative use cases of A-IoT, may be provided based on step A and step B of FIG. 9. An A-IoT device, after receiving an A-IoT paging message in step A and subsequently receiving an A-IoT MSG2 or completing an A-IoT random access procedure in step B, may perform D2R data transmission.

A command procedure may be provided based on step A, step B, step C1, and step C2. An A-IoT device, after receiving an A-IoT paging message in step A, subsequently receiving an A-IoT MSG2 or completing an A-IoT random access procedure in step B, and after performing R2D data transmission in step C1, may perform D2R data transmission.

For the D2R data transmission, an A-IoT device may transmit a D2R message/data based on scheduling information included in a (most recent/previous) R2D message received from a reader (e.g., access occasion, frequency band/sub-band/resource/resource set, transport block size, modulation, coding, etc.) and/or based on scheduling information determined at the MAC layer of the A-IoT device.

The D2R data may be provided with A-IoT MSG1.

For example, D2R data (MAC SDU) may be included in an A-IoT MSG1 MAC PDU. The A-IoT MSG1 MAC PDU may be composed of one corresponding MAC header and one MAC SDU.

As another example, the A-IoT MSG1 and the D2R data may be transmitted via separate MAC sub-PDUs. One corresponding MAC PDU may include one A-IoT MSG1 MAC sub-PDU and one D2R data MAC sub-PDU. The A-IoT MSG1 MAC sub-PDU may include one corresponding MAC subheader and one MAC MSG1 CE. Alternatively, the A-IoT MSG1 MAC sub-PDU may include only one MAC subheader.

If there is no higher-layer data to transmit when transmitting A-IoT MSG1, the A-IoT MSG1 MAC PDU may include one MAC header and one MAC MSG1 CE. Alternatively, the A-IoT MSG1 MAC PDU may include only one corresponding MAC header.

A MAC layer/entity on a D2R link (or on an R2D link) between an A-IoT device and an A-IoT RAN/reader may support segmentation. When triggered/instructed by an A-IoT service request (and/or by an A-IoT RAN/reader), if the size of one MAC PDU including D2R data to be transmitted from an A-IoT device is larger than the size of a scheduling resource/transport block received/determined at the A-IoT device, the A-IoT device may perform segmentation at the MAC layer/entity.

For example, if the size of one MAC SDU including higher-layer data included in one MAC PDU plus a MAC header is larger than the size of a scheduling resource/transport block received/determined at an A-IoT device, data/bitstream/bytes/bits of the higher-layer data up to a size that fits within the received/determined scheduling resource/transport block among the higher-layer data (e.g., the size of a part of the higher-layer data included in a segment plus a MAC header is equal to (or equal to or less than) the size of the scheduled resource/transport block) (or a part of the higher-layer data) may be included in one segment. The segment may include one MAC PDU having one MAC header and one MAC SDU provided as the part of the higher-layer data.

As another example, if the size of one or more MAC SDUs including one or more higher-layer data (e.g., one or more A-IoT NAS messages, one or more A-IoT data) included in one MAC PDU plus respective MAC subheaders is larger than the size of a scheduling resource/transport block received/determined at an A-IoT device, data/bitstream/bytes/bits up to a size such that the cumulative size of each higher-layer data plus its MAC subheader fits within the size of the received/determined scheduling resource/transport block (e.g., the size of each higher-layer data included in the segment plus its MAC subheader is equal to (or equal to or less than) the size of the scheduled resource/transport block, up to a part of the last higher-layer data) (or the MAC subheader(s) and the entirety/part of the higher-layer data(s), for example, if it is composed of two higher-layer data and only the entirety of the first higher-layer data and a part of the second higher-layer data may be transmitted, the entirety of the first higher-layer data and a part of the second higher-layer data) may be included in one segment. The segment may may include one MAC PDU having one or more corresponding MAC subheaders and one or more MAC SDUs provided as the entirety/part of one or more corresponding higher-layer data.

The bit order of each parameter field within a MAC PDU is represented such that the first and most significant bit is located at the leftmost bit, and the last and least significant bit is located at the rightmost bit.

An A-IoT device, to support segmentation function, may store segment information in a register (or volatile memory or temporary storage memory when the A-IoT device has available energy).

For example, segment information may be buffered/stored at the AS layer (MAC layer). An A-IoT device, at the MAC layer, may indicate instruction information according to MAC header processing in a MAC PDU received from an A-IoT RAN/reader and/or a field/information in the MAC header and/or higher-layer data included in the MAC PDU (e.g., A-IoT NAS message/container, A-IoT (application) data) to a higher layer (A-IoT NAS, A-IoT data/application). An A-IoT device may receive instruction information based on higher-layer processing and/or higher-layer data (e.g., A-IoT NAS message/container, A-IoT (application) data) from a higher layer.

Higher-layer data may be carried in one MAC SDU as information including a header of the higher layer. One or more higher-layer data may be included in one MAC SDU and processed together. Or, each higher-layer data may be processed as a respective MAC SDU. (Alternatively, higher-layer data may be payload information of the higher layer not including a header of the higher layer.)

An A-IoT device may store the higher-layer data at the MAC layer. An A-IoT device may generate a MAC PDU to be transmitted at the MAC layer based on scheduling information received from an A-IoT RAN/reader (and/or based on scheduling information determined at the MAC layer of the A-IoT device). If segmentation is performed for any reason (e.g., if the size of higher-layer data included in a MAC PDU plus a MAC header is larger than a received scheduling resource), an A-IoT device may store the segment information at the MAC layer. An A-IoT device may transmit the MAC PDU or the segment to an A-IoT RAN/reader. When an A-IoT device receives a retransmission instruction for the MAC PDU or the segment from an A-IoT RAN/reader, the A-IoT device may transmit the MAC PDU or the segment to the A-IoT RAN/reader.

Segment information may represent location information of a MAC SDU segment in bytes/bits within a corresponding/original MAC SDU. (Or, segment information may represent location information of a MAC PDU segment in bytes/bits within a corresponding/original MAC PDU.) Segment information may represent a start/first byte/bit of a MAC SDU/PDU segment in bytes/bits within a corresponding/original MAC SDU/PDU. And/or, segment information may represent an end/last byte/bit of a MAC SDU/PDU segment in bytes/bits within a corresponding/original MAC SDU/PDU. And/or, segment information may represent a start/first byte/bit of a MAC SDU/PDU segment to be transmitted in bytes/bits within a corresponding/original MAC SDU/PDU. For example, it may represent the end/last byte/bit +1 of a previously transmitted MAC SDU/PDU segment successfully received by a reader. And/or, segment information may represent an end/last byte/bit of a previously transmitted MAC SDU/PDU segment in bytes/bits within a corresponding/original MAC SDU/PDU. For example, it may represent the end/last byte/bit of a previously transmitted MAC SDU/PDU segment successfully received by a reader. And/or, segment information may be associated with the MAC SDU/PDU as a device variable. An example is described for convenience of description. This is for convenience of description, and the present disclosure is not limited to this example. If a MAC SDU received from a higher layer is 100 bytes, and in the first D2R scheduling, 30 bytes are decided to be transmitted excluding the MAC header (or 45 bytes including the MAC header), and in the second D2R scheduling, 70 bytes are decided to be transmitted excluding the MAC header (or 85 bytes including the MAC header), the start position of the segment transmitted according to the first D2R scheduling may be 0 and the end position may be 30. The start position of the segment transmitted according to the second D2R scheduling may be 30+1 and the end position may be 100. Or, the start position of the segment transmitted according to the first D2R scheduling may be 0 and the end position may be 45. The start position of the segment transmitted according to the second D2R scheduling may be 45+1 and the end position may be 130.

As another example, the segment information may be included in the D2R/R2D MAC PDU (or MAC PDU header).

As another example, information for indicating success/failure of a segment transmission transmitted from an A-IoT RAN/reader to an A-IoT device may include segment information in the same transmission or in a transmission after/next/subsequent to the transmission. As an example, an A-IoT RAN/reader that successfully received one segment transmitted by an A-IoT device may indicate the end/last byte/bit of the successfully received MAC SDU/PDU segment. Or, an A-IoT RAN/reader that successfully received one segment transmitted by an A-IoT device may include the start/first byte/bit of a segment of the original higher-layer data that is to be subsequently transmitted, following the successfully received MAC SDU/PDU segment.

As another example, when an A-IoT device transmits a segment to an A-IoT RAN/reader, the A-IoT device may store the segment information as a device variable. If segment information different from the segment information for the currently transmitted segment is stored in the device variable, it may update/modify/change the segment information (for the device variable).

As another example, when an A-IoT device transmits a MAC PDU or a segment to an A-IoT RAN/reader and receives information indicating success for the MAC PDU or the segment from the A-IoT RAN/reader, it may update/discard/delete/remove the segment information (for the device variable).

As another example, segment information may be buffered/stored at a higher layer (A-IoT NAS layer, A-IoT data/application layer). An A-IoT device, at the MAC layer, may indicate instruction information according to MAC header processing in a MAC PDU received from an A-IoT RAN/reader and/or a field/information in the MAC header and/or higher-layer data included in the MAC PDU (e.g., A-IoT NAS message/container, A-IoT (application) data) to a higher layer (e.g., A-IoT NAS or A-IoT data/application). Information indicated to a higher layer may include information for indicating the size/volume/amount of higher-layer data to be included in a MAC PDU, for generating the MAC PDU to be transmitted based on scheduling information received at the MAC layer from an A-IoT RAN/reader (and/or based on scheduling information determined at the MAC layer of the A-IoT device). The higher-layer data may represent data including a higher-layer header. Alternatively, the higher-layer data may represent payload data of the higher layer not including a header of the higher layer.

Information indicated to a higher layer may include segment transmission instruction information or retransmission instruction information for a previously transmitted segment.

A higher layer of an A-IoT device (e.g., A-IoT NAS layer or A-IoT data/application layer) may generate a MAC SDU (or higher-layer data, A-IoT NAS PDU, A-IoT data/application PDU) to be indicated/submitted/delivered to a MAC layer based on received information.

An A-IoT device may store the higher-layer data at the higher layer (e.g., at least one of an A-IoT NAS layer and an A-IoT data/application layer). Or, an A-IoT device may store higher-layer data at an A-IoT NAS layer.

An A-IoT device may determine whether to perform segmentation at the higher layer/A-IoT-NAS layer based on information received from the MAC layer. Or, an A-IoT device may determine whether to perform segmentation at the MAC layer and indicate/deliver instruction information for performing segmentation to the higher layer/A-IoT-NAS layer.

If segmentation is performed, for example, if the size of the higher-layer data (e.g., A-IoT NAS PDU or A-IoT data/application PDU) is larger than the size of data based on information received from the MAC layer (e.g., size/volume/amount of higher-layer data to be included in a MAC PDU) and/or if segmentation-related information is received from the MAC layer, an A-IoT device may store the segment information at the higher layer/A-IoT-NAS layer. An A-IoT device may deliver/submit/indicate the segment (or MAC SDU(s)) from the higher layer/A-IoT-NAS layer to the MAC layer. An A-IoT device may indicate/deliver instruction information according to the higher-layer processing and/or the segment information from the higher layer/A-IoT-NAS layer to the MAC layer. An A-IoT device may transmit the MAC PDU or the segment to an A-IoT RAN/reader at the MAC layer. When an A-IoT device receives a retransmission instruction for the MAC PDU or the segment from an A-IoT RAN/reader, the MAC layer of the A-IoT device may indicate the retransmission instruction information to a higher layer. An A-IoT device may deliver/submit/indicate the MAC PDU or the segment (or MAC SDU) from the higher layer/A-IoT-NAS layer to the MAC layer. An A-IoT device may transmit the MAC PDU or the segment to an A-IoT RAN/reader at the MAC layer.

Segment information may represent location information of a MAC SDU segment in bytes/bits within a corresponding/original MAC SDU. Or, segment information may represent location information of a MAC SDU (or MAC PDU) segment in bytes/bits within a corresponding/original MAC PDU.

Segment information may represent a start/first byte/bit of a MAC SDU/PDU segment in bytes/bits within a corresponding/original MAC SDU/PDU. And/or segment information may represent an end/last byte/bit of a MAC SDU/PDU segment in bytes/bits within a corresponding/original MAC SDU/PDU. And/or segment information may represent a start/first byte/bit of a MAC SDU/PDU segment to be transmitted in bytes/bits within a corresponding/original MAC SDU/PDU. As an example, it may represent the end/last byte/bit +1 of a previously transmitted MAC SDU/PDU segment successfully received by a reader. and/or segment information may represent the end/last byte/bit of a previously transmitted MAC SDU/PDU segment in bytes/bits within a corresponding/original MAC SDU/PDU. As an example, it may represent the end/last byte/bit of a previously transmitted MAC SDU/PDU segment successfully received by a reader. Segment information may be associated with the MAC SDU/PDU as a device variable.

Segment information may represent location information of a NAS/data PDU segment in bytes/bits within a corresponding/original NAS/data PDU. Segment information may represent a start/first byte/bit of a NAS/data PDU segment in bytes/bits within a corresponding/original NAS/data PDU. And/or, segment information may represent an end/last byte/bit of a NAS/data PDU segment in bytes/bits within a corresponding/original NAS/data PDU. And/or, segment information may represent a start/first byte/bit of a NAS/data PDU segment to be transmitted in bytes/bits within a corresponding/original NAS/data PDU. As an example, the end/last of a previously transmitted MAC SDU/PDU segment successfully received by a reader and/or segment information may represent the end/last byte/bit of a previously transmitted NAS/data PDU segment in bytes/bits within a corresponding/original NAS/data PDU. As an example, it may represent the end/last byte/bit of a previously transmitted MAC SDU/PDU segment successfully received by a reader. And/or, segment information may be associated with the NAS/data PDU as a device variable.

As another example, the segment information may be included in the NAS PDU (or NAS PDU header) or MAC PDU (or MAC PDU header). As an example, an A-IoT RAN/reader that successfully received one segment transmitted by an A-IoT device may indicate the end/last byte/bit of the successfully received MAC SDU/PDU segment. Or, an A-IoT RAN/reader that successfully received one segment transmitted by an A-IoT device may include the start/first byte/bit of a segment of original higher-layer data that is to be subsequently transmitted, following the successfully received MAC SDU/PDU segment.

As another example, information for indicating success/failure of a segment transmission transmitted from an A-IoT RAN/reader to an A-IoT device may include segment information in the same transmission or in a transmission after/next/subsequent to the segment transmission. As an example, an A-IoT RAN/reader may indicate the size of a previously transmitted NAS SDU/PDU received by the reader, thereby allowing the receiving A-IoT device to include the segment from the byte/bit of the size of the original NAS data SDU/PDU plus one.

As another example, when an A-IoT device delivers/submits/indicates a segment (or MAC SDU) from a higher layer/A-IoT-NAS layer to a MAC layer, the A-IoT device may store the segment information as a device variable. If segment information different from the segment information for the currently transmitted segment is stored in the device variable, it may update/modify/change the segment information.

As another example, when an A-IoT device delivers/submits/indicates a segment (or MAC SDU) from a higher layer/A-IoT-NAS layer to a MAC layer and receives information indicating success for the segment (or MAC SDU) from the MAC layer, it may update/discard/delete/remove the segment information (for the device variable).

Meanwhile, A-IoT device identification information may represent A-IoT device identification information included in an NxAP (or a service-based interface protocol between an A-IoTF and an A-IoT RAN or an application protocol on top of a service-based interface protocol between an A-IoTF and an A-IoT RAN/reader)/NGAP message between an A-IoTF and an A-IoT RAN, or A-IoT device identification information used at a Non-Access Stratum (NAS) layer/entity of an A-IoTF and an A-IoT device. The information may represent at least one of a full permanent Ambient IoT Device Identifier configured for an A-IoT device, a part of a permanent Ambient IoT Device Identifier, the entirety of a permanent A-IoT device identifier security-processed/verified (e.g., ciphering/encryption, integrity protection, Message Authentication Code, hash function, and/or device authentication), a part of a security-processed/verified permanent A-IoT device identifier, a code calculated/generated/derived/determined through security processing/verification for the A-IoT device (or a full/partial permanent A-IoT device identifier), a code associated with the A-IoT device (or a full/partial permanent A-IoT device identifier), and filtering/mask information for determining/extracting A-IoT device identification information. A permanent A-IoT device identifier may be assigned by an operator or a 3rd party. A permanent A-IoT device identifier may include one of a network identifier (e.g., Mobile Country Code (MCC) + Mobile Network Code (MNC) and/or Network Identifier (NID)) or information used to identify a 3rd party. A permanent A-IoT device identifier may include information used to distinguish different A-IoT devices within a network identifier (e.g., MCC+MNC and/or NID) or information used to identify a 3rd party (e.g., Electronic Product Code (EPC) or other local/internal identification information). In any signaling process, one or more A-IoT device identification information may be used for one A-IoT device. In one embodiment, information used to identify a network identifier (e.g., MCC+MNC and/or NID) or a 3rd party may be used as first A-IoT device identification information, and information used to distinguish different A-IoT devices within the information used to identify a network identifier (e.g., MCC+MNC and/or NID) or a 3rd party (e.g., EPC (Electronic Product Code) or other local/internal identification information) may be used as second A-IoT device identification information. At least one of the first A-IoT device identification information and the second A-IoT device identification information (or at least one of the entirety/part of the first A-IoT device identification information and the entirety/part of the second A-IoT device identification information) may be security-processed/verified and transmitted/received. (e.g., first A-IoT device identification information (plaintext), second A-IoT device identification information (ciphertext), or vice versa)

A security parameter may represent at least one of a key, key identification information, a fresh value, a counter, a token, a verification value, a random parameter (e.g., a random parameter generated in a core network or a random parameter generated in a device), an algorithm, and a device credential/profile used for security (e.g., ciphering/encryption, integrity protection, Message Authentication Code, hash function, and/or device authentication) processing/verification of a full/partial permanent A-IoT device identifier at an A-IoTF and/or an A-IoT device.

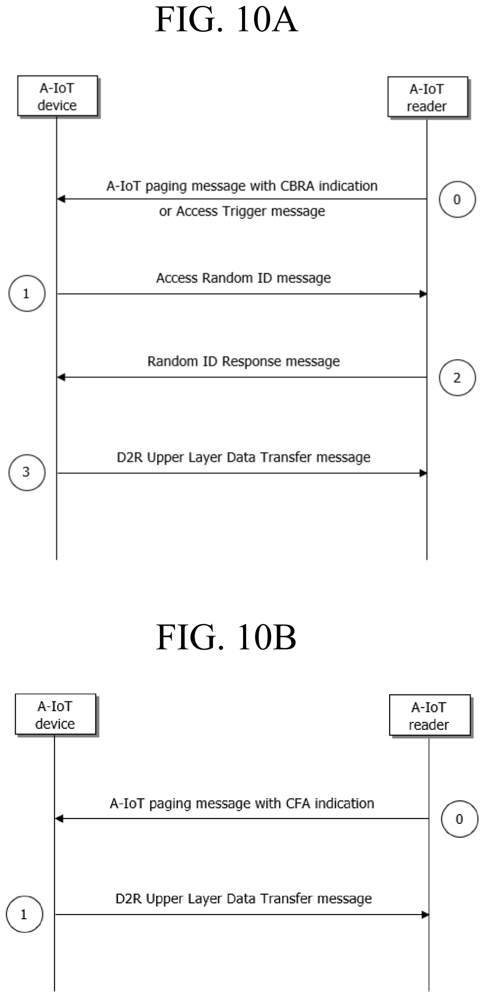

**FIGS. 10A to 10B** **illustrate A-IoT access procedures to which one embodiment of the present specification may be applied.**

The main services and functions of the A-IoT MAC layer are as follows:
- Paging;
- Access;
- Transfer of upper layer data;
- Construct MAC PDUs to be mapped onto D2R transport blocks and delivered to the physical layer;
- MAC padding;
- D2R segmentation;
- Process MAC PDUs from R2D transport blocks delivered from the physical layer;
- Failure detection.

### A-IoT Paging

A-IoT paging may allow an A-IoT reader to trigger A-IoT CBRA or A-IoT CFA for one, multiple, or all A-IoT devices. The A-IoT paging message is transmitted on the PRDCH. An A-IoT paging message may include at most one paging identifier. The paging identifier may be an A-IoT Device Permanent Identifier or filtering information. If the paging identifier is included, the paging message is transmitted to a specific A-IoT device or a group of A-IoT devices. If the paging identifier is not included, the paging message is transmitted to all A-IoT devices. Additionally, the A-IoT paging message provides configuration for the A-IoT access procedure.

### A-IoT Access Procedure

For A-IoT access, both an A-IoT contention-based random access (CBRA) procedure and an A-IoT contention-free access (CFA) procedure may be supported. When an A-IoT device is paged, the A-IoT device initiates either the A-IoT CBRA procedure or the A-IoT CFA procedure based on an explicit instruction included in an A-IoT paging message.

In the case of CBRA (FIG. 10A), the A-IoT device randomly selects one access occasion among access occasions configured in the A-IoT paging message. In order to determine the start of the selected access occasion, the device may monitor an Access Trigger message and transmit an A-IoT MSG1 (Access Random ID message) in the selected access occasion. The start of a first A-IoT MSG1 resource set is directly indicated by the A-IoT paging message instead of the Access Trigger message.

After transmitting the A-IoT MSG1, the device monitors an A-IoT MSG2 (Random ID Response message) until either i) a configured number of Access Trigger messages has been received or ii) a subsequent A-IoT paging message has been received. That is, any A-IoT MSG2 received after either of the above conditions is satisfied is not processed.

When the A-IoT MSG2 includes a frequency index (if present) matching the frequency index used for the MSG1 transmission and includes the same Random ID as transmitted in the MSG1, the device considers that contention resolution is successful. Otherwise, the device considers that contention resolution has failed. When the contention resolution is successful, the device transmits a D2R Upper Layer Data Transfer message using resources provided in the A-IoT MSG2. When the contention resolution fails, and if an A-IoT paging message having the same transaction ID is received, the device performs re-access.

In the case of CFA (FIG. 10B), the A-IoT device transmits the D2R Upper Layer Data Transfer message using a dedicated resource provided in the A-IoT paging message. In the CFA case, monitoring of the Access Trigger message is not required.

According to an embodiment, a device in a wireless communication system receives a paging message including first device identification information, and determines whether the first device identification information matches second device identification information stored in the device. Thereafter, based on a result of the checking, the device transmits a medium access control (MAC) message including upper layer data, wherein the paging message may include a first security parameter and information indicating the presence of the first security parameter.

The first security parameter may be used to generate a security-protected identifier, and the security-protected identifier may be generated from a device identifier.

In addition, the upper layer data may include at least one of the device identifier and a second security parameter generated by the device. Here, the device identifier and the second security parameter may be included in a non-access stratum (NAS) message as separate fields from each other.

In addition, the paging message may include a specific field, and based on the specific field, at least one of the first device identification information and the first security parameter may be delivered to an upper layer by the device.

In addition, checking whether the first device identification information matches the second device identification information stored in the device may include instructing, by an upper layer, a MAC layer as to whether the first device identification information matches the second device identification information.

The embodiments described up to now may be implemented in various ways. For example, the embodiments may be implemented by hardware, firmware, software, or a combination thereof. Details will be described below with reference to the accompanying drawings.

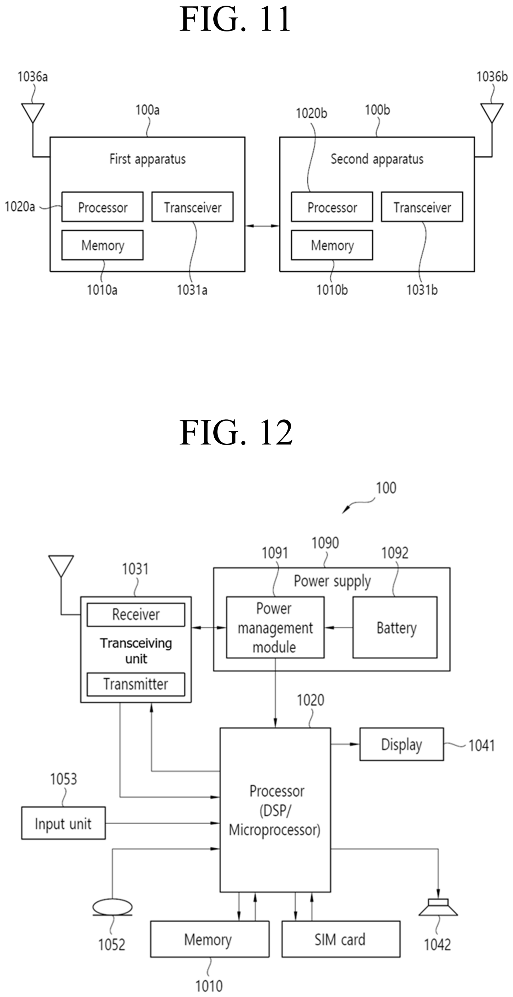

**FIG. 11** **is a block diagram showing apparatuses according to an embodiment of the disclosure.**

Referring to FIG. 11, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medical apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medical apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 12** **is a block diagram showing a terminal according to an embodiment of the disclosure.**

In particular, FIG. 12 illustrates the previously described apparatus of FIG. 11 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some constituent elements are referred to as a unit in the disclosure. However, the embodiments are not limited thereto. For example, such term "unit" may also refer to a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and conveys the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

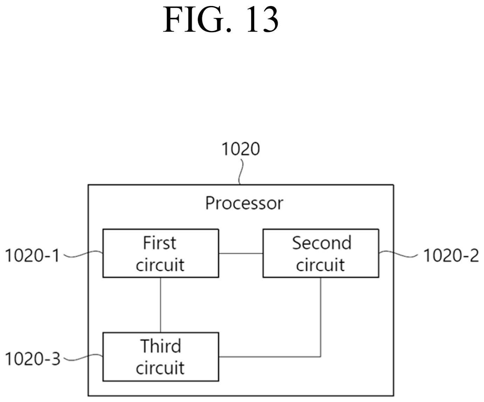

**FIG. 13** **is a block diagram of a processor in accordance with an embodiment.**

Referring to FIG. 13, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

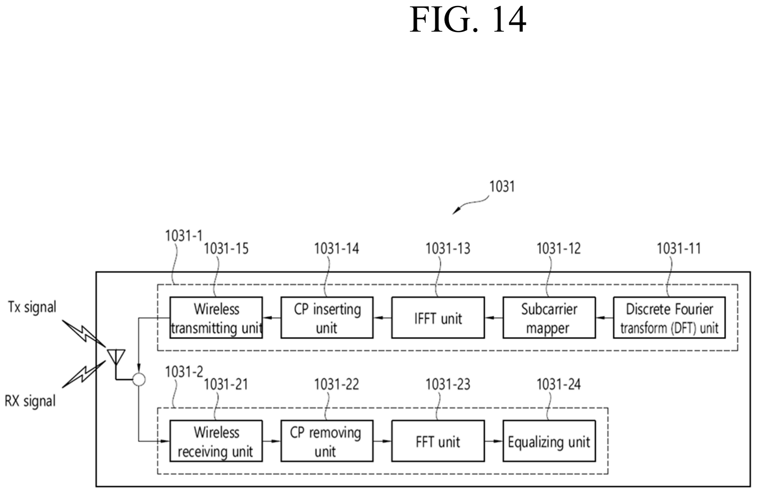

**FIG. 14** **is a detailed block diagram of a transceiver of a first apparatus shown in** **FIG. 11** **or a transceiving unit of an apparatus shown in** **FIG. 12****.**

Referring to FIG. 14, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some constituent elements are referred to as a unit in the disclosure. However, the embodiments are not limited thereto. For example, such term "unit" may also refer to a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, data communication of a device that provides ultra-low complexity and ultra-low power operation in a wireless communication system may be effectively controlled.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method for processing data of a device in a wireless communication system, the method comprising:
receiving a paging message including first device identification information;
checking whether the first device identification information matches second device identification information stored in the device; and
based on a result of the checking, transmitting a medium access control (MAC) message including upper layer data,
wherein the paging message includes a first security parameter and information indicating presence of the first security parameter.

2. The method of claim 1, wherein the first security parameter is used to generate a security-protected identifier.

3. The method of claim 2, wherein the security-protected identifier is generated based on a device identifier.

4. The method of claim 3, wherein the upper layer data includes at least one of the device identifier and a second security parameter calculated by the device.

5. The method of claim 4, wherein the device identifier and the second security parameter are included in a non-access stratum (NAS) message as separate fields.

6. The method of claim 1, wherein the paging message includes a predetermined field, and based on the predetermined field, at least one of the first device identification information and the first security parameter is delivered to an upper layer.

7. The method of claim 1, wherein the checking whether the first device identification information matches the second device identification information includes instructing, by an upper layer, the MAC layer whether the first device identification information matches the second device identification information.

8. A device in a wireless communication system, comprising:
at least one processor; and
at least one memory configured to store instructions and operably electrically connectable to the at least one processor,
wherein operations performed based on the instructions executed by the at least one processor comprise:
receiving a paging message including first device identification information;
checking whether the first device identification information matches second device identification information stored in the device; and
based on a result of the checking, transmitting a medium access control (MAC) message including upper layer data,
wherein the paging message includes a first security parameter and information indicating presence of the first security parameter.

9. The device of claim 8, wherein the first security parameter is used to generate a security-protected identifier.

10. The device of claim 9, wherein the security-protected identifier is generated based on a device identifier.

11. The device of claim 10, wherein the upper layer data includes at least one of the device identifier and a second security parameter calculated by the device.

12. The device of claim 11, wherein the device identifier and the second security parameter are included in a non-access stratum (NAS) message as separate fields.

13. The device of claim 8, wherein the paging message includes a predetermined field, and based on the predetermined field, at least one of the first device identification information and the first security parameter is delivered to an upper layer.

14. The device of claim 8, wherein the checking whether the first device identification information matches the second device identification information includes instructing, by an upper layer, the MAC layer whether the first device identification information matches the second device identification information.
